# EUROPÄISCHE PATENTSCHRIFT

(11) **EP 0 743 282 B1**
(45) Veröffentlichungstag und Bekanntmachung des Hinweises auf die Patenterteilung: **28.07.1999**
(21) Anmeldenummer: 96107535.5
(22) Anmeldetag: 11.05.1996
(51) Int. Cl.: C01B 31/02

(54) **Verfahren zur Herstellung und Verwendungen von Polyfluorfulleren**
Process for the preparation of polyfluorofullerenes and uses thereof
Procédé de préparation de fullérènes polyfluorés et leurs utilisations

(30) Priorität: 19.05.1995 DE 19518005
(43) Veröffentlichungstag der Anmeldung: 20.11.1996
(73) Patentinhaber: Bradic, Marijan, 43260 Krizevci (HR)
(72) Erfinder: Bradic, Marijan, 43260 Krizevci (HR)
(74) Vertreter: Mammel, Ulrike, Dr. Dipl.-Chem.

(56) Entgegenhaltungen:
- DATABASE WPI Section Ch, Week 9409 Derwent Publications Ltd., London, GB; Class E36, AN 94-071652 XP002011829 & JP-A-06 024 720 (IDEMITSU KOSAN CO LTD) , 1.Februar 1994
- CHEMICAL ABSTRACTS, vol. 120, no. 15, 11.April 1994 Columbus, Ohio, US; abstract no. 191300b, HAMWI ET AL: XP002011827 & FULLERENE SCI. TECHNOL. , Bd. 1, Nr. 4, 1993, Seiten 499-535,
- CHEMICAL ABSTRACTS, vol. 120, no. 20, 16.Mai 1994 Columbus, Ohio, US; abstract no. 253858a, SAUNDERS ET AL : XP002011828 & J. AM. CHEM. SOC., Bd. 116, Nr. 5, 1994, Seiten 2193-2194,
- DATABASE WPI Section Ch, Week 9333 Derwent Publications Ltd., London, GB; Class E36, AN 93-261928 XP002011830 & JP-A-05 179 269 (HITACHI LTD) , 20.Juli 1993

## Beschreibung

Die Erfindung betrifft ein Verfahren zur Herstellung und Verwendungen von Polyfluorfulleren.

Diese Anmeldung ist eine Nachanmeldung zu der deutschen Patentanmeldung Aktenzeichen Nr. 195 18 005.4, deren Offenbarungsgehalt hier ausdrücklich und vollständig einbezogen wird.

Polyfluorfullerene leiten sich von den Fullerenen ab.
Die neue Stoffklasse der Fullerene C₆₀, C₇₀ wurde erstmals 1985 durch massenspektroskopische Untersuchungen als existent nachgewiesen (A. Hirsch, Angew. Chem. 1993, 105, 1189) und erste makroskopische Mengen konnten 1990 hergestellt werden (N.Matsuzawa, D.A. Dixon, T. Fukunaga,, J.Phys. Chem. 1992, 96, 7594).

Polyfluorfullerene wurden bisher durch Behandlung einer Lösung von Fulleren in Dichlormethan mit XeF₂ oder Einwirkung von F₂-Gas unter geringem Druck auf festes Fulleren erhalten (M. Saunders, H.A. Jimenez-Vazquez, R. James Cross, S. Mroczkowski, M. L. Gross, D.E. Giblin, R. J. Poreda, J. Am. Chem. Soc. 1994, 116, 2193).
Es wurden dabei Polyfluorfullerene mit unterschiedlichem Fluorierungsgrad erhalten. Sie haben die allgemeine Summenformel Cₘ F₂ₙ, wobei m, n natürliche Zahlen, m = 60 oder 70 und n = 15 - 35 darstellt. n kann auch unterhalb sowie oberhalb des angegebenen Bereichs variieren. So wurde bereits ein hyperfluoriertes Fulleren mit n = 51 und der allgemeinen Summenformel C₆₀ F₁₀₂ massenspektroskopisch nachgewiesen. Auch Fullerene mit m > 70 und die entsprechenden fluorierten Verbindungen sind möglich.

In Fullerene Sci. Technol. (1993), 1 (4), 499-535 werden umfangreiche Untersuchungsergebnisse offenbart, die die Herstellung von Polyfluorfullerenen durch Einwirkung von F₂-Gas auf festes Fulleren betreffen, wobei Reaktionszeiten, Temperatur und der F₂-Druck variiert wurden. Außer dem diente sowohl reines C₆₀-Fulleren als auch ein Gemisch aus C₆₀/C₇₀-Fullerenen als Ausgangsverbindung.

Als Verwendung der neuen Substanzklasse der Polyfluorfullerene ist in den Derwent Abstr. Nr. 94-071652/09 zu JP 060 24720-A offenbart, daß durch Einwirkung von F₂-Gas auf Fulleren in Gegenwart von Fluorwasserstoff hergestelltes Polyfluorfulleren als Schmiermittel oder als Additiv für Schmiermittel geeignet ist.

Der Erfindung liegt die Aufgabe zugrunde, ein weiteres Herstellungsverfahren sowie Verwendungen von Polyfluorfulleren anzugeben.

Bei dem erfindungsgemäßen Verfahren wird als Ausgangsverbindung Fulleren, gelöst in einem apolaren Lösungsmittel, mit einer Polytetrafluorethylendispersion vermischt und die Reaktionsmischung während der Vermischungszeit mit Fluoreszenzlicht einer Wellenlänge im Bereich von in etwa 380-780 nm bestrahlt. Als Aktivierungsenergie wird Fluoreszenzlicht eingesetzt, da Fulleren photoempfindlich ist und im sichtbaren Bereich des Spektrums von in etwa 200 bis 600 nm absorbiert. Als apolares Lösungsmittel wird vorzugsweise Benzol oder Toluol verwendet. Dem Fachmann sind darüber hinaus weitere Lösungsmittel bekannt, die auch verwendet werden können, wie beispielsweise Hexan. Auch Gemische aus zumindest jeweils zwei geeigneten Lösungsmitteln können verwendet werden. Die Vermischungszeit der Fullerenlösung mit der Polytetrafluorethylendispersion beträgt zumindest in etwa 10 Minuten. Eine Erhöhung der Vermischungszeit wirkt sich nicht nachteilig auf das Reaktionsergebnis aus.
Die Temperatur kann während der Vermischungszeit bei in etwa 30 bis 40°C oder bei über 100°C gehalten werden. Dabei ist jedoch darauf zu achten, daß die Temperatur unterhalb der Zerfallstemperatur des Polytetrafluorethylens bleibt.

Polyfluorfulleren kann durch Sublimation bei in etwa 350°C unter Schutzgasatmosphäre isoliert werden. Es kann aber auch durch Extraktion mittels eines apolaren Lösungsmittels, vorzugsweise Benzol oder Toluol, isoliert werden. Letzteres ist möglich, weil die nicht zu Polyfluorfulleren umgesetzten Bestandteile der Reaktionsmischung in dem genannten Lösungsmittel nicht lösbar sind. Auch hier sind dem Fachmann weitere geeignete Lösungsmittel bekannt, wie beispielsweise Hexan. Auch können Gemische aus zumindest zwei geeigneten Lösungsmitteln verwendet werden.
Wahlweise kann nach der Extraktion eine Sublimation erfolgen, um hochreines, festes Polyfluorfulleren verfügbar zu machen.

Das erfindungsgemäß hergestellte Polyfluorfulleren kann einer breiten Anwendung zugeführt werden. Es kann beispielsweise als Ölungsmittel in der chemischen Industrie oder als Schmiermittel, beziehungsweise als Zusatz zu Schmiermitteln verwendet werden.

Die Erfindung betrifft auch nach dem erfindungsgemäßen Verfahren hergestelltes Polyfluorfulleren.

Im folgenden soll die Erfindung anhand experimenteller Ergebnisse näher erläutert werden.

### I. Herstellung des Polyfluorfullerens

### 1. Versuch

In 5ml Benzol wurden 40mg Fulleren gelöst und 2g dispergiertes Polytetrafluorethylen hinzugegeben. Das hierfür verwendete Fulleren wurde im Institut "Ruder Boskovic", Zagreb, erzeugt oder von Hoechst bezogen. Der Reinheitsgrad des von Hoechst bezogenen Fullerens betrug nach Herstellerangaben 99,9%. Dabei kann das verwendete Fulleren aus C₆₀, C_{>60}, C₇₀ und C_{>70}, sowie Mischungen dieser Fullerene bestehen. Die Temperatur wird auf zwischen 30 und 40°C eingestellt und beide Komponenten werden mittels Ultraschall und unter Rühren über einen Zeitraum von 10 Min. miteinander vermischt. Zusätzlich wird während des Rührens Aktivierungsenergie in Form von Fluoreszenzlicht zugeführt. Dabei liegt die emittierte Strahlung im sichtbaren oder nahe dem sichtbaren Bereich des Spektrums, in etwa im Bereich von 380 bis 780 nm. Das für diese Fluorierungsreaktion verwendete Reaktionsgefäß besteht aus Polytetrafluorethylen.
Bei dem Vermischungsvorgang entsteht aus der weißen Dispersion des Polytetrafluorethylens und der violetten Lösung des Fullerens eine Reaktionsmischung hell- bis dunkelgelber Farbe.

### 2. Versuch: Variation der Vermischungszeit

Es wurde verfahren wie unter I.1. beschrieben, jedoch die Vermischungszeit variiert. Diese wurde schrittweise erhöht, bis eine Vermischungszeit von 3 Tagen erreicht war.
Es wurden gegenüber der Vermischungszeit von 10 Min. keine feststellbaren Änderungen des Reaktionsergebnisses erzielt, insbesondere die Ausbeute blieb im wesentlichen konstant.

### 3. Versuch: Variation der Fullerenkonzentration

Es wurde verfahren wie unter I.1. beschrieben, jedoch die Fullerenkonzentration variiert. Dabei wurde festgestellt, daß bis zu 2 g Fulleren in 5 ml Benzol gelöst werden konnten. Die Menge an dispergiertem Polytetrafluorethylen wurde konstant gehalten. Die beste Umsetzung wurde erzielt, wenn 600 mg Fulleren verwendet wurden, bei gleichbleibendem Lösungsmittelvolumen von 5 ml und dispergiertem Polytetrafluorethylen von 2 g.

### 4. Versuch: Variation der Temperatur

Es wurde zunächst so verfahren, wie unter I.1. beschrieben. Um jedoch eine größere Sättigung zu erzielen, wurde die Reaktionsmischung anschließend über einen Zeitraum von bis zu 5 Tagen auf in etwa 100°C erwärmt. Unter größerer Sättigung wird dabei zum einen eine höhere Ausbeute verstanden und zum anderen ein höherer Fluorierungsgrad in Richtung n = 30 der allgemeinen Summenformel, welches dem perfluorierten Fulleren entsprechen würde.
Es wurden gegenüber der Reaktion, wie unter I.1. beschrieben, keine feststellbaren Änderungen des Reaktionsergebnisses erzielt, insbesondere die Ausbeute blieb im wesentlichen konstant. Vorteilhaft ist diese Temperaturerhöhung jedoch in Hinblick auf die Isolierung des Polyfluorfullerens durch Sublimation - wie weiter unten (II.1.) beschrieben - da bei Verwendung von Benzol als Lösungsmittel dieses bei der genannten Temperatur bereits abgedampft ist und die Sublimation direkt durchgeführt werden kann.

### 5. Versuch: Variation des Lösungsmittels

Es wurde verfahren wie unter I.1. bis I.4. beschrieben, jedoch statt Benzol Toluol verwendet. Es wurden gegenüber Benzol keine feststellbaren Änderungen des Reaktionsverhaltens und -ergebnisses erzielt.
Generell eignen sich apolare Lösungsmittel sehr gut. Je polarer ein Lösungsmittel ist, desto weniger geeignet ist es, als Lösungsmittel im Rahmen der vorliegenden Erfindung eingesetzt zu werden. Demgemäß können Lösungsmittel wie THF und Aceton noch Verwendung finden, während beispielsweise Wasser als Lösungsmittel ungeeignet ist.

### 6. Versuch:

Es wurde verfahren, wie unter I.1. beschrieben, jedoch statt der Fullerenlösung pulverförmiges Fulleren eingesetzt. Die Temperatur wurde auf in etwa 400°C erhöht. Es konnte keine Umsetzung zu Polyfluorfulleren beobachtet werden.

### II. Isolierung des Polyfluorfullerens

### 1. Durch Sublimation

Die Temperatur der Reaktionsmischung wird nach durchgeführter Vermischung so weit erhöht, daß das Lösungsmittel abdampfen kann, jedoch wird die Temperatur unterhalb der Zerfallstemperatur des Polytetrafluorethylens gehalten. In der Regel wurde eine Temperatur von etwas über 100°C gewählt.
Anschließend wird die Temperatur auf in etwa 350°C erhöht, und Polyfluorfulleren unter Schutzgasatmosphäre sublimiert.
Die Sublimation kann auch im Vakuum durchgeführt werden. Sowohl die Sublimation unter Schutzgasatmosphäre als auch im Vakuum sind geeignet, das Entstehen von Nebenprodukten, wie Oxy-Verbindungen von Polyfluorfulleren, durch zumindest teilweise Reaktion mit Sauerstoff, im wesentlichen zu verhindern.

### 2. Durch Extraktion

Polyfluorfulleren kann mittels Extraktion aus der Reaktionsmischung entfernt werden. Als Extraktionsmittel dient Benzol oder Toluol, da das in der Reaktionsmischung noch enthaltene Polytetrafluorethylen, das nicht mit der Fullerenlösung reagiert hat, in Benzol unlöslich ist, während sich Polyfluorfulleren in Benzol löst. Auch weitere apolare Lösungsmittel, wie beispielsweise Hexan oder Gemische aus zumindest jeweils zwei geeigneten apolaren Lösungsmitteln können verwendet werden.
Falls erforderlich, kann das Polyfluorfulleren anschließend aus dem Extrakt sublimiert werden, wie unter II.1. beschrieben.
Das Reaktionsprodukt wurde mittels Massenspektrometrie untersucht. Dabei wurde festgestellt, daß sich Polyfluorfullerene der allgemeinen Summenformel Cₘ F₂ₙ gebildet haben, wobei m = 60, 70 und n = 20-35 ist.

## Patentansprüche

1. Verfahren zur Herstellung von Polyfluorfulleren, bei dem eine Fullerenlösung in einem apolaren Lösungsmittel mit einer Polytetrafluorethylendispersion vermischt und die Reaktionsmischung mit Fluoreszenzlicht bestrahlt wird.

2. Verfahren nach Anspruch 1, dadurch gekennzeichnet, daß als apolares Lösungsmittel Benzol oder Toluol verwendet wird.

3. Verfahren nach Anspruch 1 oder 2, dadurch gekennzeichnet, daß die Vermischungszeit zumindest in etwa 10 Minuten beträgt.

4. Verfahren nach einem der Ansprüche 1 bis 3, dadurch gekennzeichnet, daß die Temperatur während der Vermischungszeit zumindest bei in etwa 30 bis 40°C gehalten wird.

5. Verfahren nach einem der Ansprüche 1 bis 4, dadurch gekennzeichnet, daß die Temperatur nach der Vermischungszeit zur Entfernung des Lösungsmittels vorzugsweise auf über 100°C erhöht, jedoch unterhalb der Zerfallstemperatur des Polytetrafluorethylens gehalten wird.

6. Verfahren nach einem der Ansprüche 1 bis 5, dadurch gekennzeichnet, daß das Polyfluorfulleren durch Sublimation bei in etwa 350°C unter Schutzgasatmosphäre isoliert wird.

7. Verfahren nach einem der Ansprüche 1 bis 4, dadurch gekennzeichnet, daß das Polyfluorfulleren durch Extraktion mittels eines apolaren Lösungsmittels, vorzugsweise Benzol oder Toluol, isoliert wird.

## Claims

1. Process for preparing polyfluorofullerene, in which process a fullerene solution in an apolar solvent is mixed with a polytetrafluoroethylene dispersion and the reaction mixture is irradiated with fluorescent light.

2. Process according to Claim 1, characterized in that benzene or toluene is used as apolar solvent.

3. Process according to Claim 1 or 2, characterized in that the mixing time is at least approximately 10 minutes.

4. Process according to one of Claims 1 to 3, characterized in that the temperature during the mixing time is held at least at approximately 30 to 40°C.

5. Process according to one of Claims 1 to 4, characterized in that the temperature is increased, preferably to above 100°C, after the mixing time to remove the solvent, but is held below the decomposition temperature of the polytetrafluoroethylene.

6. Process according to one of Claims 1 to 5, characterized in that the polyfluorofullerene is isolated by sublimation at approximately 350°C under a protective gas atmosphere.

7. Process according to one of Claims 1 to 4, characterized in that the polyfluorofullerene is isolated by extraction with an apolar solvent, preferably benzene or toluene.

## Revendications

1. Procédé de préparation de fullérènes polyfluorés, dans lequel une solution de fullérène est mélangée avec une dispersion de polytétrafluoroéthylène dans un solvant apolaire et le mélange réactionnel est irradié avec de la lumière fluorescente.

2. Procédé selon la revendication 1, caractérisé en ce que l'on utilise le benzène ou le toluène en tant que solvant apolaire.

3. Procédé selon la revendication 1 ou 2, caractérisé en ce que la période de mélange est d'au moins environ 10 minutes.

4. Procédé selon l'une quelconque des revendications 1 à 3, caractérisé en ce que la température durant la période de mélange est maintenue au moins entre environ 30 et 40°C.

5. Procédé selon l'une quelconque des revendications 1 à 4, caractérisé en ce que la température, après la période de mélange est portée de préférence à plus de 100°C en vue d'éliminer le solvant, mais est maintenue en dessous de la température de décomposition du polytétrafluoroéthylène.

6. Procédé selon l'une quelconque des revendications 1 à 5, caractérisé en ce que le fullérène polyfluoré est isolé par sublimation à environ 350°C sous atmosphère de gaz inerte.

7. Procédé selon l'une quelconque des revendications 1 à 4, caractérisé en ce que le fullérène polyfluoré est isolé par extraction à l'aide d'un solvant apolaire, de préférence le benzène ou le toluène.
